(19) Europäisches Patentamt
European Patent Office
Office européen des brevets

(11) EP 0 712 486 B1

(12) EUROPEAN PATENT SPECIFICATION

(45) Date of publication and mention
of the grant of the patent:
23.09.1998 Bulletin 1998/39

(21) Application number: 94922964.5

(22) Date of filing: 01.08.1994

(51) Int Cl.6: G01F 1/66, G01P 5/00

(86) International application number:
PCT/GB94/01673

(87) International publication number:
WO 95/04258 (09.02.1995 Gazette 1995/07)

(54) **IMPROVEMENTS RELATING TO FLUID FLOW MONITORING**

VERBESSERUNGEN BEZÜGLICH DER ÜBERWACHUNG VON FLÜSSIGKEITSSTRÖMUNGEN

AMELIORATIONS DANS LA SURVEILLANCE DES FLUX DE FLUIDES

(84) Designated Contracting States:
DE ES FR GB IT NL

(30) Priority: 02.08.1993 GB 9316001

(43) Date of publication of application:
22.05.1996 Bulletin 1996/21

(73) Proprietor: G. Kromschröder Aktiengesellschaft
D-49080 Osnabrück (DE)

(72) Inventors:
• COLLIER, James, Digby Yarlet, Stanley House
Wilburton Cambridge CB6 3PZ (GB)
• DAVIES, Christopher
Cambridge CB4 5SL (GB)
• FRYER, Christopher, James Newton
Woburn Sands
Buckinghamshire MK17 8PG (GB)
• WAHA, Alain, Henri
Stansted Montfitchet CM24 8AU (GB)

(74) Representative: Skone James, Robert Edmund
GILL JENNINGS & EVERY
Broadgate House
7 Eldon Street
London EC2M 7LH (GB)

(56) References cited:
EP-A- 0 007 782          EP-A- 0 512 455
DE-A- 3 704 472          GB-A- 2 259 571

## Description

The invention relates to methods for monitoring fluid flow and to fluid flow meters.

A common method for monitoring fluid flow involves monitoring the time of flight of acoustic waves between a pair of transducers between which a fluid medium flows. Neglecting interference effects in the flow, the time taken for a sound or acoustic signal to travel from one transducer to the other is a function of the distance 1 between the two transducers, the speed of sound c in the fluid medium, and the velocity U at which the fluid is moving uniformly. Thus, the time of flight $T_+$ in the downstream direction is given by:

$$T_+ = \frac{l}{c+U} + T_{+el} \qquad (1)$$

where $T_{+el}$ indicates the electrical and other delays in the processing circuitry and the transducers.

Similarly, the time of flight $T_-$ in the upstream direction is given by:

$$T_- = \frac{l}{c-U} + T_{-el} \qquad (2)$$

If the electrical delays are negligible, known or fixed, then $T_{el}$ can be subtracted or neglected and then equations 1 and 2 can be solved to eliminate c and obtain U.

This situation corresponds to highly stable transducers, operating in a known gas or with a poor efficiency at a low Q.

If better matched transducers are used, offering a better efficiency and lower cost, the value of $T_{el}$ varies with time, temperature and gas composition. Therefore, it needs to be eliminated from the equations. A known method is to measure c, as described in GB-A-2259571 which utilizes an auxiliary transducer solely for calibration purposes to enable the speed of sound "c" in the fluid to be determined. This is disadvantageous in that it requires the use of an additional transducer and a separate chamber in which to make the measurement.

EP-A-0512455 discloses a fluid flow meter in which two ultrasonic transducers are provided which transmit at different frequencies.

In accordance with the present invention, a method of monitoring fluid flowing along a path between first and second transducers comprises causing acoustic signals to be transmitted from the first transducer to the second transducer and from the second transducer to the first transducer along respective first and second acoustic paths extending through the fluid; monitoring the times of flight of the acoustic signals along the two acoustic paths; and deriving information relating to the flow of the fluid from the monitored times of flight and is characterised in that the first and second acoustic paths have different lengths.

As will be explained in more detail below, by monitoring the times of flight of the acoustic signals along two different acoustic paths between a pair of transducers it is possible to derive information relating to the fluid flow rate independent of the absolute values of the electrical delays and speed of sound.

In one arrangement, the second acoustic path includes a portion which is physically separate from the first acoustic path. In this case, account must be taken of the fact that fluid may flow at different rates through the two paths.

In another example, each of the first and second acoustic paths is defined by a respectively different odd number of passages of an acoustic signal along substantially the same physical path between the transducers through the fluid.

In one example of this latter method, the first acoustic path may comprise a single traverse between the transducers while the second acoustic path comprises three traverses between the transducers (known as a "3 L echo"). In this case only three times of flight need to be measured.

In accordance with a second aspect of the present invention, a fluid flow meter comprises first and second transducers spaced apart in the direction of fluid flow; a transmitter connected by a first electrical circuit to the transducers for causing acoustic signals to be transmitted through the fluid by either one of the transducers to the other of the transducers; a processor connected to the transducers by a second electrical circuit for determining information relating to the fluid flow by monitoring the time of flight of acoustic signals received by the transducers, wherein the processor is arranged to monitor the time of flight of acoustic signals transmitted between the transducers along first and second different acoustic paths passing through the fluid; and at least two fluid passages between the transducers through which fluid flows in use, the first and second different acoustic paths being defined through respective ones of the passages, the passages having different lengths.

This meter is much more compact than the meter of GB-A-2259571 in that the same transducers are used both for monitoring fluid flow and obtaining calibration information.

In one example, part of the space between the transducers through which fluid flows is defined by a plurality of subsidiary fluid flow passages, all but one of the passages having substantially equal lengths, the one passage having a length which is different from the length of the other passages. Typically, the one passage is longer than the other passages, typically in the range 2 to 5 times as long.

Preferably, the one passage has an entry opening positioned substantially centrally of the entry openings of the other passages. This maximises the amplitude of the acoustic signal transmitted along the one passage.

In accordance with a third aspect of the present invention, a fluid flow meter comprises first and second transducers spaced apart in the direction of fluid flow; a transmitter connected by a first electrical circuit to the transducers for causing acoustic signals to be transmitted through the fluid by either one of the transducers to the other of the transducers; a processor connected to the transducers by a second electrical circuit for determining information relating to the fluid flow by monitoring the time of flight of acoustic signals received by the transducers, wherein the processor is arranged to monitor the time of flight of acoustic signals transmitted between the transducers along first and second different acoustic paths passing through the fluid; and a reflector adjacent each transducer to reflect acoustic signals back towards the other transducer, wherein each of the first and second acoustic paths is defined by a respectively different odd number of passages of an acoustic signal along substantially the same physical path between the transducers through the fluid.

In this case, where the same physical path is used to define both acoustic paths, it is important to maximise the reflection of the acoustic signals. However, if a transducer is well matched to a received acoustic signal then the signal will be poorly reflected and dispersed. The meter therefore comprises a reflector adjacent each transducer to reflect acoustic signals back towards the other transducer. Typically, the reflectors will have a generally concave form, although other shapes, e.g. planar, could be used. In any event, the reflectors will typically be shaped to match the outlet of the flow path.

In some cases, the ends of the fluid flow path between the transducers are flared generally outwardly towards the respective transducers. This helps to improve signal transmission and coupling by "expanding" the acoustic signals as they approach the transducer and is particularly useful where the transducer is associated with an adjacent reflector as described above.

Although the invention has been described in terms of monitoring times of flight, it will often be convenient to monitor times of flight indirectly by monitoring phase differences. This is described in more detail in our co-pending patent application GB-A-2275108 incorporated herein by reference.

A fluid flow meter according to the invention can be reduced to a small physical size (e.g. house brick size) and can be produced at low cost. Such a meter is highly suitable for domestic gas metering.

Very low power consumption, which enables long term battery operation, can be achieved through a high electro-acoustic conversion efficiency and simple data processing.

The design is insensitive to gas composition when used as a gas meter, and can be implemented with different fluids, including liquids, for example water.

Typically, the acoustic signals will comprise ultrasonic signals.

Some examples of methods and meters according to the invention will now be described with reference to the accompanying drawings, in which:-

Figure 1 is a schematic, longitudinal section through a first example of a meter;
Figure 2 is a section taken on the line B-B in Figure 1;
Figure 3 is a view similar to Figure 1 but of a second example;
Figure 4 is a section taken on the line A-A in Figure 3;
Figure 5 is a block circuit diagram of the circuit connected to the transducers in both Figures 1 and 3;
Figure 6A illustrates an edge detector algorithm graphically; and,
Figure 6B shows the variation with time of signals in Figure 6A.

Before describing the construction of the preferred meters in detail, the theory behind the present invention will be set out.

As has already been mentioned above, if there are significant electrical delays effecting the measured time of flight then these delays must be taken in to account before the fluid flow velocity can be accurately measured. In the present case, this is achieved by utilizing two different acoustic paths which will be labelled using the subscripts 1,2 respectively. The variety of forms of these acoustic paths will be explained in more detail below but for present purposes it will be assumed that both extend through the fluid and have different physical lengths $l_1, l_2$ respectively. It will also be assumed for the purposes of the mathematical analysis that the electrical delays experienced will be the same whichever way acoustic signals are transmitted along the paths and whichever path is involved. Since the electrical delays are the same, they will be referred to throughout by $T_{el}$.

Consider an acoustic signal transmitted downstream in the direction of fluid flow between one transducer and the other along a path 1. The total time measured between emitting the signal by one transducer and apparently receiving it at the other transducer after passage along the first acoustic path is given by:

$$T_{1+} = \frac{l_1}{c+U_1} + T_{el} \tag{3}$$

where $U_1$ is the fluid flow rate along the first path.

In a similar way, the measured time of flight for an acoustic signal transmitted along a second path 2, physically different from the first path 1, in the downstream direction is given by:

$$T_{2+} = \frac{l_2}{c+U_2} + T_{el} \tag{4}$$

where $U_2$ is the fluid flow rate along the second path.

Two further measurements can be obtained defining apparent times of flight of acoustic signals in the upstream direction along the two paths and these are given by:

$$T_{1-} = \frac{l_1}{c-U_1} + T_{el} \tag{5}$$

$$T_{2-} = \frac{l_2}{c-U_2} + T_{el} \tag{6}$$

The flow rates $U_1, U_2$ which are ultimately to be determined can be found by eliminating $T_{el}$ and c. Thus, by combining equations 3 and 5 we obtain:

$$U_1 = \frac{(c^2 - U_1^2)(T_{1-} - T_{1+})}{2l_1} \tag{7}$$

Since $c \gg U_1$, equation 7 can be simplified to:

$$U_1 = \frac{c^2(T_{1-} - T_{1+})}{2l_1} \tag{8}$$

Thus if c is known, $U_1$ can be obtained.

A similar expression can be derived for $U_2$ and an overall value for the mean flow velocity can be obtained as a weighted average of the two values $U_1, U_2$. For example, if the two paths are defined by passages with cross-sections $A_1, A_2$ respectively then the mean value of the flow velocity U may be defined as:

$$U = \frac{A_1 U_1 + A_2 U_2}{A_1 + A_2} \tag{9}$$

In order to obtain a value for c, equations 3 and 5 and 4 and 6 are separately combined to yield equations 10 and 11 respectively:

$$T_{1+} + T_{1-} = 2T_{el} + l_1 \left( \frac{1}{c+U_1} + \frac{1}{c-U_1} \right) \tag{10}$$

$$T_{2+} + T_{2-} = 2T_{el} + l_2 \left( \frac{1}{c + U_2} + \frac{1}{c - U_2} \right) \qquad (11)$$

Now subtracting equation 11 from equation 10 and making the approximation that $c \gg U_1$ and $U_2$ we obtain:

$$(T_{1+} + T_{1-}) - (T_{2+} + T_{2-}) = \frac{2l_1}{c} - \frac{2l_2}{c} \qquad (12)$$

which can be rewritten as:

$$c = \frac{2(l_1 - l_2)}{(T_{1+} + T_{1-}) - (T_{2+} + T_{2-})} \qquad (13)$$

Thus, the speed of sound in the fluid is defined in terms of the four measured times of flight and a constant. Equation 13 can be substituted back into equation 8 to yield a value for $U_1$ as follows:

$$U_1 = \left( 2 \frac{(l_1 - l_2)}{(T_{1+} + T_{1-}) - (T_{2+} + T_{2-})} \right)^2 \frac{(T_{1-} - T_{1+})}{2l_1} \qquad (14)$$

A similar expression can be derived for $U_2$.

It will be seen therefore that equation 14 yields a value for fluid flow rate derived solely from the measured times of flight and various constants. Nevertheless, account has been taken of electrical delays and the speed of sound in the fluid (which can vary with time).

This analysis can be generalised to deal with the situation where the electrical delay in the upstream direction $T_{el-}$ is different from the electrical delay in the downstream direction $T_{el+}$. In this case, equation 14 can be rewritten as:

$$U_1 = \left( \frac{2(l_1 - l_2)}{(T_{1+} + T_{1-} + T_{el+} + T_{el-}) - (T_{2+} + T_{2-} + T_{el+} + T_{el-})} \right)^2 \frac{(T_{1-} - T_{1+} + T_{el-} - T_{el+})}{2l_1}$$

$$= \left( \frac{2(l_1 - l_2)}{(T_{1+} + T_{1-}) - (T_{2+} + T_{2-})} \right)^2 \frac{(T_{1-} - T_{1+} + T_{el-} - T_{el+})}{2l_1} \qquad (15)$$

It will be noted that in the denominator, the absolute values of $T_{el+}$ and $T_{el-}$ are not required. If they are not the same, their difference defines an offset which can be accepted or calibrated out. A further possibility is to ensure the difference is zero. This can be achieved using certain known circuits and also more recently developed circuits which will be explained in more detail below.

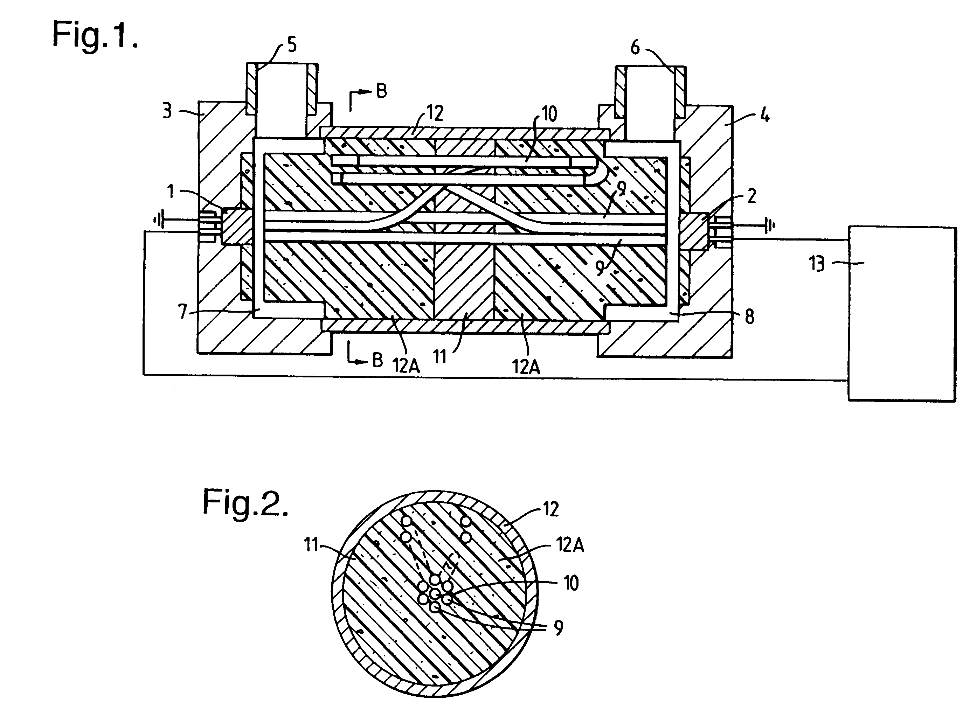

In order therefore to determine a value for fluid flow rate, it is necessary to have two acoustic paths along which ultrasonic signals can be transmitted. Each acoustic path must begin and end with a different transducer and must have a different length. Figures 1 and 2 illustrate a first example of a fluid flow meter which provides two such paths. In this example, the meter comprises a pair of transducers 1,2 mounted in respective end caps 3,4. Fluid enters the flow meter through an inlet port 5 and exits through an outlet port 6. Each of the ports 5,6 communicates with a respective chamber 7,8, the chambers being connected by a set of elongate passageways 9 of substantially equal cross-section and length and an additional passageway 10 which is substantially longer than the passageways 9. As can be seen in Figure 2, the passageways 9 are arranged around the passageway 10 at each end of the flow path between the chambers 7,8. In the central region, the passageway 10 passes out from the bundle of passageways 9 and undergoes a number of reversals as can be seen in Figure 1 thus extending its length over the passageways 9. The passageways 9,10 are supported within the meter by a support disc 11 which in turn is mounted in a casing 12 extending between the end plates 3,4. The remaining space is filled with a sound absorbent material 12A although in practice such material is only needed adjacent the transducer and the ends of the passageways 9,10.

The width of each passageway 9 is typically chosen to avoid the passage of more than a single mode while the length of the passageway 10 is chosen to be sufficiently long to achieve a measurable difference in time of flight over the time of flight through the passageways 9 while avoiding undue attenuation of the signal. A typical difference in times of flight would be in the range 2.5-3 milliseconds while typically the length of the passageway 10 can be between 2 and 5 times the length of the passageways 9.

In one example, the passageways 9,10 are formed by a set of straws.

The exit and entry ends of the passageways 9,10 are only shown schematically in Figure 1. In practice, some shaping of the entry and exits may be applicable but this is described in much more detail in our co-pending International Patent Application No. PCT/GB94/00157 incorporated herein by reference.

The transducers 1,2 are connected to a processing system 13 which will be described in more detail below.

In operation, the transducer 1 will be caused to transmit an acoustic signal towards the passageways 9,10 (i.e. in the downstream direction). The transducer 2 will initially receive that portion of the signal which passes through the passageways 9 and a corresponding electrical output signal from the transducer 2 will be passed to the system 13 which can then compute the time $T_{1+}$. A little later, that portion of the acoustic signal which has passed along the passageway 10 will be received by the transducer 2 and the processing system 13 can then compute the time of flight value $T_{2+}$. The system 13 then causes the transducer 2 to transmit an acoustic signal in the upstream direction towards the transducer 1 from which the system 13 can then compute the values $T_{1-}$ and $T_{2-}$.

Having obtained the values, the system 13 can then compute the values $U_1$ and $U_2$ using equation 14 (or equation 15) and can then compute the overall mean flow velocity U as in equation 9. This mean value may be displayed on a monitor (not shown) and/or stored.

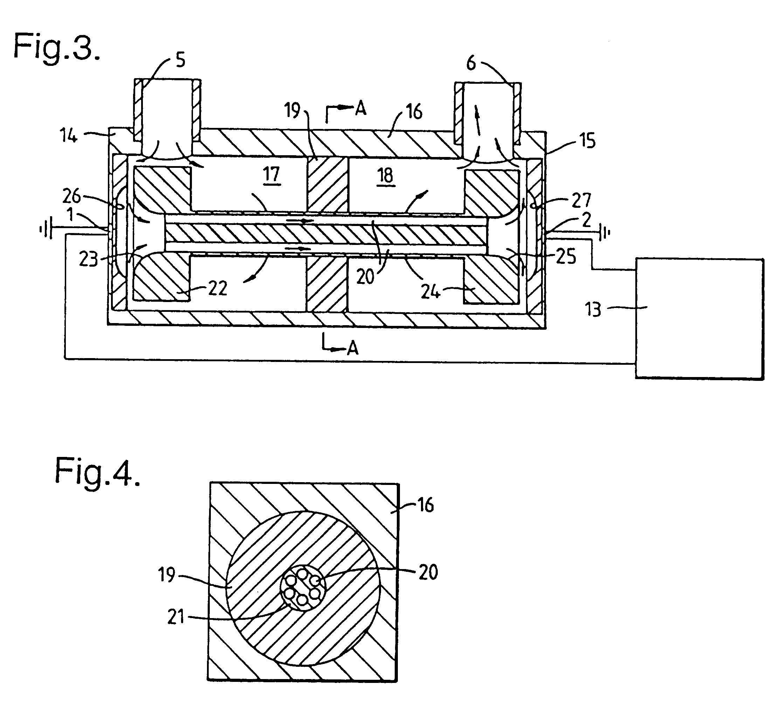

In the example shown in Figures 3 and 4, the physical path which is used to define both acoustic paths is the same. In this example, the transducers 1,2 are mounted in end plates 14,15 which in turn are mounted at the ends of a cylinder 16. The cylinder 16 is divided into two chambers 17,18 by a rigid mounting block 19. A fluid inlet passage 5 opens into the chamber 17 and the fluid outlet port 6 opens into the chamber 18.

A set of fluid passageways 20 which are substantially parallel are formed by bores through a cylindrical block 21 supported by the block 19. An entry block 22 of sound absorbent material is mounted about the passageways 20 in the chamber 17 and defines an outwardly flared surface 23 while a similar block 24 is mounted about the passageways 20 in the chamber 18 and again defines an outwardly flared surface 25.

The surface adjacent each transducer 1,2 is formed as a concave reflector 26,27 respectively.

In this example, the first acoustic path between the transducers 1,2 is defined by a single passage of an acoustic signal along the passageways 20 from one transducer to the other. The second acoustic path is constituted by the passage of an acoustic signal from one transducer along the passageways to the other, reflection back to the one transducer and a second refection back to the other transducer where the time of arrival of the signal is then monitored. This is known as the 3 L echo.

Once again, four measured times of flight are determined from which the fluid flow velocity is obtained. In this case, since the same physical path is used for all acoustic signals, it is assumed that the fluid flow rate is the same and thus consequently no mean flow velocity needs to be obtained. In other words, $U = U_1$ in equation 14.

Since the same physical path is used, only three times of flight need to be measured. It can be shown easily that the fourth time is a function of the other three. For example:

$$T_{2-} = T_{2+} - T_{1+} + T_{1-}$$

In the Figure 3 example, it is important that a "good" echo or reflection is obtained at each transducer. However, normally it is important to match a transducer to the acoustic signal which thus reduces reflectivity. In order therefore to increase reflectivity, the reflectors 26,27 are provided to ensure that a large amount of the acoustic signal is predictably reflected. Preferably, the size of the transducers 1,2 is minimised to increase the reflector/transducer ratio.

The use of the flared surfaces 23,25 improves signal transmission and coupling from the end of the passageways 20 to the reflectors 26,27. The flare reduces the discontinuity of the end of the passageways 20 and "expands" the sound onto the reflectors. This has the double advantage of making the reflectors work predictably with a variety of fluid compositions and reduces the unwanted echo arising from the end of the passageways.

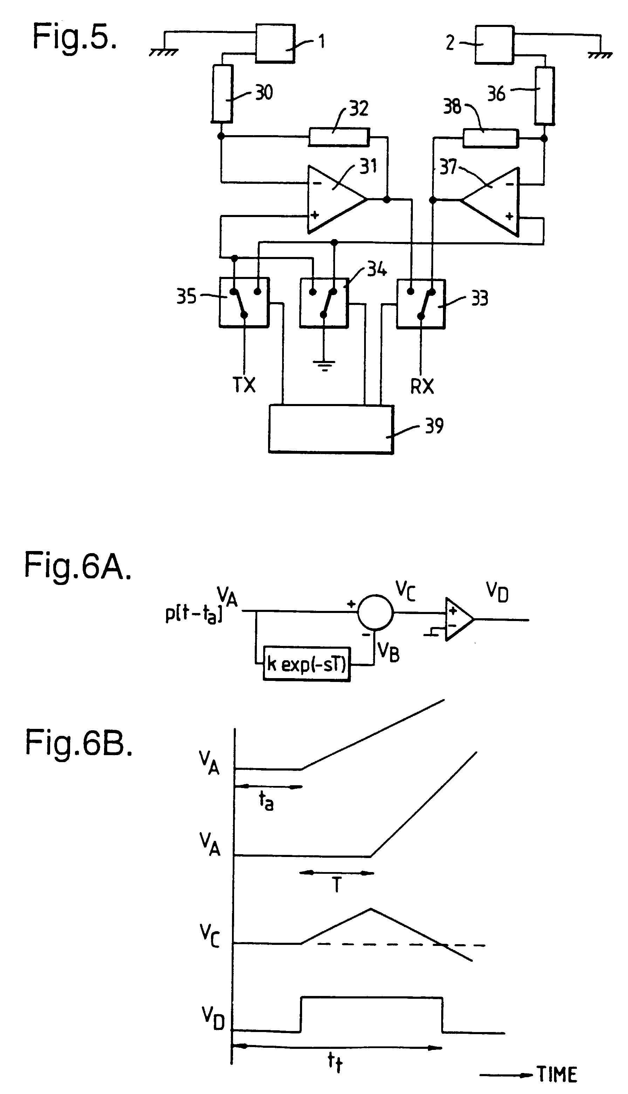

As explained above, in some cases a difference between the electrical delays may need to be eliminated. This can be achieved by using a circuit within the system 13 for transmitting and receiving signals which is of the form shown in Figure 5.

In this circuit, the transducer 1 is connected via a damping resistor 30 to the inverting input of an operational amplifier 31. The output from the amplifier 31 is fed back through a feedback resistor 32 to the inverting input. The output is also fed to a switch 33 connected to the digital signal processing circuit 22 (not shown). The non-inverting input of the operational amplifier 31 is connected to a pair of switches 34,35 in parallel. The input to the switch 34 is connected to ground (or a virtual earth) and the input to the switch 35 is connected to the signal generator 20.

The transducer 2 is connected in a similar manner via a damping resistor 36 to the inverting input of an operational amplifier 37. A feedback resistor 38 is connected between the output of the operational amplifier 37 and the inverting input of the operational amplifier while the output of the operational amplifier is fed to the switch 33. The non-inverting input of the amplifier 37 is connected in parallel to switches 34,35.

The switches 33-35 are controlled from a control unit 39 to operate in tandem. Thus, as shown in Figure 5, the transducer 1 is connected via the switch 35 to a signal generator (not shown) while the transducer 2 is connected to a signal processing circuit (not shown) of the system (13) via the switch 33 with the non-inverting input to the operational amplifier 37 connected to ground by the switch 34. This circuit ensures that each transducer is presented with an identical impedance in transmit and receive modes.

Typically, the transducers 1,2 are piezo-electric ultrasonic transducers, resonant at 40kHz with a $Q{\leq}50$, as available for example from Murata (MA40S3). The damping resistors 30,36 are typically each 4k$\Omega$. The Operational Amplifiers 31,37 typically have a gain much greater than 5 at 40kHz.

Other suitable circuits are described in our co-pending International Patent Application No. PCT/GB94/00156 incorporated herein by reference.

As is mentioned above, the monitoring of times of flight could be carried out directly to determine individual times of flight or alternatively using phase measurements. As can be seen from equation 14, there are essentially, two times that are to be determined in each case:

1. The difference between upstream and downstream times. (Numerator).
2. The difference between the means of the times for the two paths. (Denominator).

In this case, the requirements on these two measurements are very different. The upstream downstream difference with gas typically has a small range (0 - 25 $\mu$s) but has very tight accuracy requirements (1ns). The difference between the two paths typically has a much larger range (800 - 2000 $\mu$s) but the accuracy requirement is less (~1$\mu$s).

Typically, therefore, a phase measurement is used to find the upstream downstream difference. In the preferred example, a constant fraction discriminator is used for the difference between the times for the two paths. The following algorithm provides an unambiguous time estimate that is independent of signal amplitude but does include a delay due to the transducers. It operates over a short time span and can therefore help to time separate wanted from unwanted signals.

The method used provides an estimate of the time of arrival of a pulse in a manner that is independent of its amplitude. It can therefore be used without the necessity for accurate gain control (required for simple thresholding detectors) and provide zero mean estimates in the presence of noise.

The basic algorithm operation is that the incoming signal is compared to a delayed version of itself. The time at which the delayed signal reaches a fixed fraction of the incoming signal is detected, termed the trigger time. The trigger time will then be a constant time after the desired time of arrival.

Figures 6A and 6B illustrate the algorithm graphically for a linear ramp input ($V_A$). The arrival time, $t_a$, is derived by subtracting the systematic algorithm delay, $t_{sys}$, from the trigger time, $t_{trig}$. For a linear ramp input and a value of k=2, $t_{sys} = 2T$ independent of signal amplitude. For a generic input signal of envelope (or form) (p[t]) and amplitude, a:

$$V_A = ap[t-t_a]$$

the delayed signal is

$$V_a = k\,a\,p[t-t_a-T]$$

The detected signal is

$$V_c = V_A - V_B = a\,p[t-t_a] - k\,a\,p[t-t_a-T]$$

The trigger time is when $V_c = 0$ so

$$a\, p[\,t_{\text{trig}}\text{-}ta]\text{-}k\, a\, p[\,t_{\text{trig}}\text{-}t_a\text{-}\,T]=0$$

This shows that the algorithm delay $t_{\text{sys}}$ is a function of the required fraction, 1/k, the delay time, T, and the form of the pulse rise, p[t] but is independent of amplitude, a.

The above analysis demonstrates that the algorithm delay, $t_{\text{sys}}$, is independent of signal amplitude. It is however, still a function of the form of the pulse rise, which varies with the damping and resonant frequency of the transducers used. The solution, as described, is to have two acoustic paths. A pulse of sound is emitted into both and the edge detection algorithm used to produce two trigger times, $t_{\text{trig-direct}}$ & $t_{\text{trig-indirect}}$ (paths 1 and 2 respectively). If direct and indirect pulses have the same rise form, then the difference between the two will be the difference between their arrival times, $t_{\text{a-direct}}$ & $t_{\text{a-indirect}}$.

## Claims

1. A method of monitoring fluid flowing along a path between first and second transducers (1,2) spaced apart in the direction of fluid flow, the method comprising causing acoustic signals to be transmitted from the first transducer to the second transducer and from the second transducer to the first transducer along respective first and second acoustic paths extending through the fluid; monitoring the times of flight of the acoustic signals along the two acoustic paths; and deriving information relating to the flow of the fluid from the monitored times of flight, characterised in that the first and second acoustic paths have different lengths.

2. A method according to claim 1, wherein the second acoustic path includes a portion which is physically separate from the first acoustic path.

3. A method according to claim 1, wherein each of the first and second acoustic paths is defined by a respectively different odd number of passages of an acoustic signal along substantially the same physical path between the transducers through the fluid.

4. A method according to claim 3, wherein the first acoustic path comprises a single traverse between the transducers while the second acoustic path comprises three traverses between the transducers.

5. A method according to any of the preceding claims, wherein the acoustic signals are transmitted in both directions along both acoustic paths.

6. A method according to any of the preceding claims, wherein the acoustic signals comprise ultrasonic signals.

7. A method according to any of the preceding claims, wherein the fluid comprises a gas.

8. A fluid flow meter comprising first and second transducers (1,2) spaced apart in the direction of fluid flow; a transmitter connected by a first electrical circuit (35,31,30;35,37,36) to the transducers for causing acoustic signals to be transmitted through the fluid by either one of the transducers (1,2) to the other of the transducers; a processor connected to the transducers by a second electrical circuit (33,31,30;33,37,36) for determining information relating to the fluid flow by monitoring the time of flight of acoustic signals received by the transducers (1,2), wherein the processor is arranged to monitor the time of flight of acoustic signals transmitted between the transducers along first and second different acoustic paths passing through the fluid; and at least two fluid passages (9,10) between the transducers through which fluid flows in use, the first and second different acoustic paths being defined through respective ones of the passages, the passages having different lengths.

9. A meter according to claim 8, wherein part of the space between the transducers (1,2) through which fluid flows is defined by a plurality of subsidiary fluid flow passages (9,10), all but one of the passages having substantially equal lengths, the one passage having a length which is different from the length of the other passages.

10. A meter according to claim 9, wherein the one passage (10) is longer than the other passages (9), typically in the range 2 to 5 times as long.

11. A meter according to claim 9 or claim 10, wherein the one passage (10) has an entry opening positioned substantially centrally of the entry openings of the other passages (9).

**12.** A fluid flow meter comprising first and second transducers (1,2) spaced apart in the direction of fluid flow; a transmitter connected by a first electrical circuit (35,31,30;35,37,36) to the transducers for causing acoustic signals to be transmitted through the fluid by either one of the transducers (1,2) to the other of the transducers; a processor connected to the transducers by a second electrical circuit (33,31,30;33,37,36) for determining information relating to the fluid flow by monitoring the time of flight of acoustic signals received by the transducers (1,2), wherein the processor is arranged to monitor the time of flight of acoustic signals transmitted between the transducers along first and second different acoustic paths passing through the fluid; and a reflector (26,27) adjacent each transducer to reflect acoustic signals back towards the other transducer, wherein each of the first and second acoustic paths is defined by a respectively different odd number of passages of an acoustic signal along substantially the same physical path between the transducers through the fluid.

**13.** A meter according to claim 12, wherein the reflectors (26,27) have a generally concave form.

**14.** A meter according to any of claims 8 to 13, wherein the ends of the fluid flow path between the transducers (1,2) are flared generally outwardly towards the respective transducers.


**Patentansprüche**

**1.** Ein Verfahren zur Überwachung eines entlang eines Weges zwischen ersten und zweiten in einem Abstand voneinander in Strömungsrichtung des Mediums befindlichen Wandlem (1,2) strömenden Mediums, wobei das Verfahren darin besteht, zu veranlassen, daß akustische Signale vom ersten Wandler zum zweiten Wandler und vom zweiten Wandler zum ersten Wandler entlang jeweiliger erster und zweiter sich durch das Medium erstreckender Schallwege gesendet werden; der Überwachung der Laufzeiten der akustischen Signale entlang der beiden Schallwege; und der Herleitung von Informationen über die Strömung des Mediums aus den überwachten Laufzeiten, dadurch gekennzeichnet, daß die ersten und zweiten Schallwege verschiedene Längen haben.

**2.** Ein Verfahren nach Anspruch 1, wobei der zweite Schallweg einen Abschnitt umfaßt, der von dem ersten Schallweg physikalisch getrennt ist.

**3.** Ein Verfahren nach Anspruch 1, wobei jeder der ersten und zweiten Schallwege durch eine jeweils verschiedene ungerade Anzahl an Durchgängen eines akustischen Signals entlang des im wesentlichen selben physikalischen Weges zwischen den Wandlern durch das Medium definiert ist.

**4.** Ein Verfahren nach Anspruch 3, wobei der erste Schallwege aus einem einzigen Durchlauf zwischen den Wandlern besteht, während der zweite Schallweg aus drei Durchläufen zwischen den Wandlern besteht.

**5.** Ein Verfahren nach einem der vorstehenden Ansprüche, wobei die akustischen Signale in beide Richtungen entlang beider Schallwege gesendet werden.

**6.** Ein Verfahren nach einem der vorstehenden Ansprüche, wobei die akustischen Signale aus Ultraschallsignalen bestehen.

**7.** Ein Verfahren nach einem der vorstehenden Ansprüche, wobei das Medium aus einem Gas besteht.

**8.** Ein Mediendurchflußmeßgerät bestehend aus ersten und zweiten in einem Abstand voneinander in Strömungsrichtung des Mediums angeordneten Wandlern (1,2); einem über eine erste elektrische Schaltung (35,31,30; 35,37,36) mit den Wandlern verbundenen Sender zur Veranlassung, daß akustische Signale von einem der Wandler (1,2) zum jeweils anderen Wandler durch das Medium gesendet werden; einem über eine zweite elektrische Schaltung (33,31,30;33,37,36) mit den Wandlern verbundenen Prozessor zur Bestimmung von Informationen über die Medienströmung durch Überwachung der Laufzeit der von den Wandlern (1,2) empfangenen akustischen Signale, wobei der Prozessor dafür sorgt, die Laufzeit von akustischen Signalen zu überwachen, die zwischen den Wandlern entlang erster und zweiter verschiedener durch das Medium hindurchgehender Schallwege gesendet werden; und mindestens zwei Medien-Durchgängen (9,10) zwischen den Wandlern, durch die Medium im Betrieb strömt, wobei die verschiedenen ersten und zweiten Schallwege durch die jeweiligen Durchgänge definiert sind, und die Durchgänge verschiedene Längen haben.

**9.** Ein Meßgerät nach Anspruch 8, wobei ein Teil des Raumes zwischen den Wandlern (1,2), durch den Medium strömt, durch eine Vielzahl von nebengeordneten Medienströmungs-Durchgängen (9,10) definiert ist, von denen bis auf einen alle Durchgänge im wesentlichen gleiche Länge haben, und dieser eine Durchgang eine Länge hat, die von der Länge der anderen Durchgänge verschieden ist.

10. Ein Meßgerät nach Anspruch 9, wobei der eine Durchgang (10) länger ist als die anderen Durchgänge (9), typischerweise im Bereich zwei- bis fünfmal so lang.

11. Ein Meßgerät nach Anspruch 9 oder Anspruch 10, wobei der eine Durchgang (10) eine im wesentlichen in der Mitte von den Eingangsöffnungen der anderen Durchgänge (9) angeordnete Eingangsöffnung hat.

12. Ein Mediendurchflußmeßgerät bestehend aus ersten und zweiten in einem Abstand voneinander in Strömungsrichtung des Mediums angeordneten Wandlern (1,2); einem über eine erste elektrische Schaltung (35,31,30; 35,37,36) mit den Wandlern verbundenen Sender zur Veranlassung, daß akustische Signale durch das Medium von einem der Wandler (1,2) zum jeweils anderen Wandler gesendet werden; einem über eine zweite elektrische Schaltung (33,31,30;33,37,36) mit den Wandlern verbundenen Prozessor zur Bestimmung von Informationen über die Medienströmung durch Überwachung der Laufzeit der von den Wandlern (1,2) empfangenen akustischen Signale, wobei der Prozessor dafür sorgt, die Laufzeit von akustischen Signalen zu überwachen, die zwischen den Wandlern entlang erster und zweiter verschiedener durch das Medium hindurchgehender Schallwege gesendet werden; und einem Reflektor (26,27) neben jedem Wandler zur Reflexion akustischer Signale in Richtung auf den anderen Wandler zurück, wobei jeder der ersten und zweiten Schallwege durch eine jeweils verschiedene ungerade Anzahl an Durchgängen eines akustischen Signals entlang des im wesentlichen selben physikalischen Weges zwischen den Wandlern durch das Medium definiert ist.

13. Ein Meßgerät nach Anspruch 12, wobei die Reflektoren (26,27) eine im allgemeinen konkave Form aufweisen.

14. Ein Meßgerät nach einem der Ansprüche 8 bis 13, wobei die Enden des Medienströmungsweges zwischen den Wandlern (1,2) im allgemeinen in Richtung auf die jeweiligen Wandler zu nach außen hin trichterförmig ausgebaucht sind.

**Revendications**

1. Procédé de surveillance d'écoulement de fluide le long d'un chemin situé entre un premier et un deuxième transducteurs (1, 2) séparés dans la direction de l'écoulement du fluide, le procédé comprenant la transmission de signaux acoustiques du premier transducteur au deuxième transducteur et du deuxième transducteur au premier transducteur le long d'un premier et d'un deuxième chemins acoustiques respectifs s'étendant à travers le fluide ; la surveillance des temps de parcours des signaux acoustiques le long des deux chemins acoustiques ; et la détermination d'informations concernant l'écoulement du fluide d'après les temps de parcours surveillés, caractérisé en ce que les premier et deuxième chemins acoustiques ont des longueurs différentes.

2. Procédé selon la revendication 1, dans lequel le deuxième chemin acoustique comporte une portion qui est physiquement séparée du premier chemin acoustique.

3. Procédé selon la revendication 1, dans lequel chacun des premier et deuxième chemins acoustiques est défini par un nombre impair respectivement différent de passages d'un signal acoustique sensiblement le long du même chemin physique entre les transducteurs, à travers le fluide.

4. Procédé selon la revendication 3, dans lequel le premier chemin acoustique comprend une simple traversée entre les transducteurs, tandis que le deuxième chemin acoustique comprend trois traversées entre les transducteurs.

5. Procédé selon l'une quelconque des revendications précédentes, dans lequel les signaux acoustiques sont transmis dans les deux sens le long des deux chemins acoustiques.

6. Procédé selon l'une quelconque des revendications précédentes, dans lequel les signaux acoustiques comprennent des signaux à ultrasons.

7. Procédé selon l'une quelconque des revendications précédentes, dans lequel le fluide comprend un gaz.

**8.** Débitmètre de fluide comprenant un premier et un deuxième transducteurs (1, 2) séparés dans la direction de l'écoulement du fluide ; un émetteur connecté par un premier circuit électrique (35, 31, 30; 35, 37, 36) aux transducteurs pour provoquer l'émission de signaux acoustiques à travers le fluide par l'un ou l'autre des transducteurs (1, 2) vers l'autre des transducteurs; un processeur connecté aux transducteurs par un deuxième circuit électrique (33, 31, 30; 33, 37, 36) pour déterminer des informations concernant l'écoulement de fluide en surveillant le temps de parcours des signaux acoustiques reçus par les transducteurs (1, 2), dans lequel le processeur est agencé pour surveiller le temps de parcours des signaux acoustiques émis entre les transducteurs le long d'un premier et d'un deuxième chemins acoustiques différents à travers le fluide ; et au moins deux passages de fluide (9, 10) entré les transducteurs, à travers lesquels s'écoule le fluide pendant l'utilisation, les premier et deuxième chemins acoustiques différents étant définis par des passages respectifs parmi les passages, les passages ayant des longueurs différentes.

**9.** Débitmètre selon la revendication 8, dans lequel ne partie de l'espace compris entre les transducteurs (1, 2) à travers lequel s'écoule le fluide est définie par une pluralité de passages d'écoulement de fluide auxiliaires (9, 10), tous les passages sauf un ayant des longueurs sensiblement égales, le premier passage ayant une longueur différente de la longueur des autres passages.

**10.** Débitmètre selon la revendication 9, dans lequel le premier passage (10) est plus long que les autres passages (9), typiquement dans la plage de 2 à 5 fois plus long.

**11.** Débitmètre selon la revendication 9 ou la revendication 10, dans lequel le premier passage (10) a une ouverture d'entrée positionnée de façon sensiblement centrale par rapport aux ouvertures d'entrée des autres passages (9).

**12.** Débitmètre de fluide comprenant un premier et un deuxième transducteurs (1, 2) séparés dans la direction de l'écoulement du fluide ; un émetteur connecté par un premier circuit électrique (35, 31, 30; 35, 37, 36) aux transducteurs pour provoquer l'émission de signaux acoustiques a travers le fluide par l'un ou l'autre des transducteurs (1, 2) vers l'autre des transducteurs; un processeur connecté aux transducteurs par un deuxième circuit électrique (33, 31, 30; 33, 37, 36) pour déterminer des informations concernant l'écoulement de fluide en surveillant le temps de parcours des signaux acoustiques reçus par les transducteurs (1, 2), dans lequel le processeur est agencé pour surveiller le temps de parcours des signaux acoustiques émis entre les transducteurs le long d'un premier et d'un deuxième chemins acoustiques différents à travers le fluide ; et un réflecteur (26, 27) adjacent à chaque transducteur pour réfléchir les signaux acoustiques vers l'autre transducteur, dans lequel chacun des premier et deuxième chemins acoustiques est défini par un nombre impair différent de passages d'un signal acoustique sensiblement le long du même chemin physique entre les transducteurs à travers le fluide.

**13.** Debitmètre selon la revendication 12, dans lequel les réflecteurs (26, 27) ont une forme généralement concave.

**14.** Débitmètre selon l'une quelconque des revendications 8 à 13, dans lequel les extrémités du chemin d'écoulement de fluide situé entre les transducteurs (1, 2) sont évasées généralement vers l'extérieur, vers les transducteurs respectifs.

Fig.1.

Fig.2.

EP 0 712 486 B1

# Fig.3.

# Fig.4.

EP 0 712 486 B1

Fig.5.

Fig.6A.

$$p[t-t_a] \quad V_A$$

$$V_C \quad V_D$$

$$V_B$$

$$k \exp(-sT)$$

Fig.6B.

$V_A$

$t_a$

$V_A$

$T$

$V_C$

$V_D$

$t_t$

TIME